# EUROPÄISCHE PATENTSCHRIFT

(11) **EP 2 084 045 B1**
(45) Veröffentlichungstag und Bekanntmachung des Hinweises auf die Patenterteilung: **31.08.2011**
(21) Anmeldenummer: 07820761.0
(22) Anmeldetag: 01.10.2007
(51) Int. Cl.: B60W 40/04, B60W 30/08, B60Q 1/52

(54) **VERFAHREN ZUM ERFASSEN EINES UMFELDS EINES FAHRZEUGS**
METHOD FOR SENSING THE ENVIRONMENT OF A VEHICLE
PROCEDE POUR DETECTER L'ENVIRONNEMENT D'UN VEHICULE

(30) Priorität: 09.10.2006 DE 102006047634
(43) Veröffentlichungstag der Anmeldung: 05.08.2009
(73) Patentinhaber: Robert Bosch GmbH, 70442 Stuttgart (DE)
(72) Erfinder: LEE, Wei-Chia, 71229 Leonberg (DE)
(86) Internationale Anmeldenummer: PCT/EP2007/060376
(87) Internationale Veröffentlichungsnummer: WO 2008/043676

(56) Entgegenhaltungen:
- EP-A- 1 598 233
- DE-A1- 10 225 894
- DE-A1- 19 510 910
- DE-A1-102005 015 396

## Beschreibung

Die Erfindung betrifft ein Verfahren zum Erfassen eines Umfelds eines Fahrzeugs, eine Einrichtung zur Durchführung des Verfahrens sowie ein Computerprogramm und ein Computerprogrammprodukt.

### Stand der Technik

Es sind sogenannte Spurwechselassistenten bekannt, die eingesetzt werden, um einen Fahrer vor einem sich, insbesondere von hinten, nähernden Fahrzeug zu warnen. Hierbei ist besonders wichtig, den Fahrer auf Fahrzeuge, die sich im toten Winkel des eigenen Fahrzeugs befinden, hinzuweisen. Dieser tote Winkel bzw. Totenwinkelbereich des Fahrzeugs ergibt sich für den Fahrer bei planen Rückspiegeln links und rechts hinten, neben dem Fahrzeug. Wird ein Fahrzeug überholt, kann der Fahrer des überholten Fahrzeugs das überholende Fahrzeug für einige Sekunden nicht sehen, es sei denn, er blickt über die Schulter. Eben dieser Schulterblick ist zwar beim Abbiegen und bei einem Spurwechsel vorgeschrieben, unterbleibt jedoch oft, insbesondere auch auf Autobahnen. Gerade bei Autobahnfahrten mit hoher Geschwindigkeit kann ein Spurwechsel weitreichende Folgen haben.

Überhohlen, Abbiegen, Ein- und Anfahren sind Situationen, in denen der Rückspiegel zum Einsatz kommt und der Blick über die Schulter obligatorisch ist. Es existieren derzeit Systeme, die den Totenwinkelbereich links und rechts des eigenen Fahrzeugs überwachen. Befindet sich ein Fahrzeug in diesen Bereichen, warnt das System den Fahrer durch ein optisches und/oder akustisches Signal. Sofern sich dieses Fahrzeug in gleicher Fahrtrichtung wie das eigene Fahrzeug bewegt, werden entgegenkommende Fahrzeuge oder stationäre Objekte jedoch nicht angezeigt.

Üblicherweise wird vor dem sich am nächsten befindlichen Objekt gewarnt. Außerdem kann optional vorgesehen sein, die Größe des Beobachtungs- bzw. Erfassungsbereichs in Abhängigkeit der Geschwindigkeit des Fahrzeugs festzulegen. Es erfolgt eine Anzeige und Warnung vor sich relativ zum Fahrzeug nur wenig bewegenden Objekten auf Basis der Umfeldsensierung, bspw. durch Ultraschallsensoren, bei Vorwärtsfahrt ab einer bestimmten Geschwindigkeit.

Zur Zeit sind Sensoren mit unterschiedlichen Erfassungsbereiche erhältlich. Weitbereich-Radarsensoren (Long Range Radar: LRR) haben eine hohe Reichweite sind aber im Nahbereich blind. Ultraschallsensoren (USS) verfügen über eine hohe Empfindlichkeit im Nahbereich haben aber keine große Reichweite. Es ist jedoch zu berücksichtigen, dass Funktionen wie der Spurwechselassistent die Kombination beider Eigenschaften erfordern, da sich manche Fahrzeuge mit sehr hohen Geschwindigkeiten nähern. Um eine rechtzeitige Warnung auszulösen, ist es daher notwendig, das sich nähernde Fahrzeug rechtzeitig zu detektieren.

Eine Möglichkeit stellt der Einsatz eines sog. Nahbereich-Radar (Short Range Radar: SRR) mit einer Reichweite bis 40m dar. Diese sind jedoch vergleichsweise teuer und haben in Europa noch keine Zulassung für die Sendefrequenz.

Es besteht somit ein Bedarf an einem Verfahren und einer Einrichtung, die den Einsatz verschiedener Sensoren mit unterschiedlichen Erfassungsbereichen erlauben und im Rahmen einer adaptiven Geschwindigkeitsregelung eingesetzt werden können.

Aus der Druckschrift EP 1 598 233 A1 ist ein Spurwechselassistent für ein Fahrzeug bekannt, wobei in diesem Fahrzeug mehrere Sensoren zur Erfassung eines Umfelds des Fahrzeugs angeordnet sind. Dabei kann unter Nutzung von Informationen zu dem Umfeld, wobei diese Informationen von den Sensoren breitgestellt werden, ein Verhalten eines weiteren Fahrzeugs, das sich in dem Umfeld befindet, vorhergesagt werden.

### Offenbarung der Erfindung

Das erfindungsgemäße Verfahren dient zum Erfassen eines Umfelds eines Fahrzeugs. Hierbei werden eine Anzahl von Sensoren eingesetzt, wobei die Sensoren unterschiedliche

Erfassungsbereiche haben. Ein Übergang eines erfassten Objekts zwischen jeweils zwei Erfassungsbereichen wird durch Nutzung eines Übergabealgorithmus durch Vorhersagen überbrückt. Aus Sicherheitsgründen können Sensoren auch redundant eingesetzt werden, d.h. dass bestimmte Erfassungsbereiche von mehr als einem Sensor überwacht werden.

In Ausgestaltung des Verfahrens wird der Totenwinkelbereich mit zumindest einem der Sensoren überwacht bzw. erfasst. Die Erfassung des Totenwinkelbereichs wird typischerweise mit einem USS abgedeckt. Zur Unterstützung kann zusätzlich ein Sensor mit höherer Reichweite, wie z.B. Video, Weitbereich-Radar (Long Rage Radar: LRR) usw., nach hinten gerichtet sein. Es wird nunmehr ein Übergabe- (Handover) Algorithmus verwendet, um den Übergang zwischen zwei Erfassungsbereichen durch Vorhersagen zu überbrücken. Während des Übergangs kann mit einer geeigneten Schnittstelle (Human Machine Interface: HMI) dieser Zustand dem Fahrer mitgeteilt. Dies kann z.B. mit einem akustischen und/oder einem optischen Signal erfolgen.

Es ist somit möglich, Fahrzeuge rechtzeitig zu detektieren, um Warnungen frühzeitig auszulösen. Der Fahrer kann eindeutig über dem Gefahrzustand informiert werden. Es ist zu beachten, dass das sich nähernde Fahrzeug, bevor es in den Totenwinkelbereich eintritt, dennoch eine potentielle Gefahr darstellt. Durch Vorhersage der Eintrittszeit können Warnungen früher ausgegeben werden

Das beschriebene Verfahren kann in Ausgestaltung zur Unterstützung eines Spurwechselassistenten oder bei einer adaptiven Geschwindigkeitsregelung eingesetzt werden.

Die erfindungsgemäße Einrichtung dient zur Durchführung eines Verfahrens zum Erfassen eines Umfelds eines Fahrzeugs und ist insbesondere zur Durchführung des vorstehend beschriebenen Verfahrens geeignet. Die Einrichtung ist mit einer Anzahl von Sensoren mit unterschiedlichen Erfassungsbereichen zu verbinden, wobei die Einrichtung dazu ausgelegt ist, einen Übergang eines Objekts, bspw. eines anderen Fahrzeugs, zwischen zwei Erfassungsbereichen zu erkennen und diesen Übergang durch Nutzung eines Übergabealgorithmus durch Vorhersagen zu überbrücken.

Die Einrichtung ist somit vorgesehen, von Sensoren erfasste Daten auszuwerten und den Fahrer auf Grundlage dieser Auswertung zu informieren und ggf. zu warnen.

Das erfindungsgemäße Computerprogramm umfasst Programmcodemittel, um alle Schritte eines vorstehend erläuterten Verfahrens durchzuführen, wenn das Computerprogramm auf einem Computer oder einer entsprechenden Recheneinheit, insbesondere in einer Einrichtung der zuvor beschriebenen Art, ausgeführt wird.

Das erfindungsgemäße Computerprogrammprodukt umfasst diese Programmcodemittel, die auf einem computerlesbaren Datenträger gespeichert sind.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt eine Verkehrssituation zur Verdeutlichung einer Ausführungsform des erfindungsgemäßen Verfahrens.
- Figur 2: zeigt eine auf die in Figur 1 dargestellte Situation folgende Verkehrssituation.
- Figur 3: zeigt eine nachfolgende Verkehrssituation.
- Figur 4: zeigt eine abschließende Verkehrssituation.
- Figur 5: zeigt eine Ausführungsform der erfindungsgemäßen Einrichtung.

### Ausführungsformen der Erfindung

Die Erfindung ist anhand von Ausführungsformen in den Zeichnungen dargestellt und wird im folgenden unter Bezugnahme auf die Zeichnungen ausführlich beschrieben.

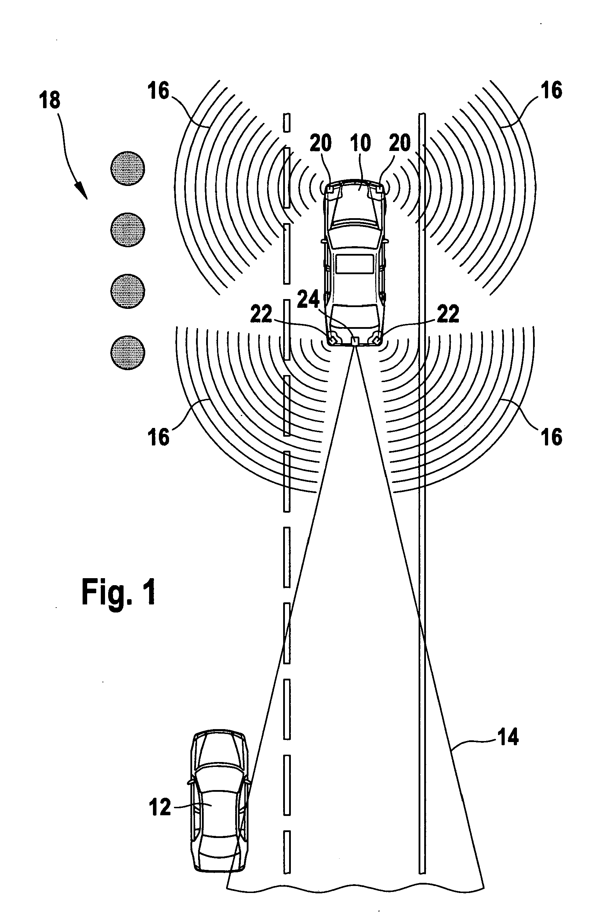

In den Figuren 1 bis 4 ist der Ablauf einer typischen Verkehrssituation, in diesem Fall ein Überholvorgang, dargestellt. Die Darstellungen zeigen ein erstes Fahrzeug bzw. Egofahrzeug 10 und ein zweites Fahrzeug bzw. Zielfahrzeug 12. Das Zielfahrzeug 12 überholt das Egofahrzeug 10, dessen Totenwinkelbereich überwacht wird. Das Egofahrzeug 10 verfügt hierzu über eine Anzahl von Sensoren. So wird bspw. mit Radar oder Video ein Fembereich 14 und mit einem oder mehreren Ultraschallensoren ein Nahbereich 16 überwacht. Zur Warnung des Fahrers des Egofahrzeugs 10 sind vier Signalleuchten 18 vorgesehen, die ein optisches Signal abgeben. Zusätzlich kann auch ein akustisches Signal abgegeben werden.

Das Verfahren zur Totenwinkelüberwachung soll den Fahrer warnen, sobald sich ein Objekt im Totenwinkelbereich des Egofahrzeugs 10 befindet. Falls dies jedoch immer erfolgen würde, würde der Fahrer mit Warnungen überflutet werden. Eine Vorbeifahrt an einer Leitplanke würde bspw. eine Dauerwarnung verursachen. Deshalb ist es wichtig, die Warnungen auf die relevanten Objekte zu beschränken. Es soll ebenso nicht bei Gegenverkehr, stehenden Objekten und bei von dem eigenen Fahrzeug überholten Fahrzeugen (Unterholer) gewarnt werden. Gewarnt werden soll jedoch bei bewegten Fahrzeugen im toten Winkel, die von hinten oder von den Seiten in den toten Winkel eintreten oder die sich nach dem Unterholen länger als eine vorgegebene Anzahl von Sekunden im toten Winkel befinden. Hierfür befinden sich auf jeder Seite des Fahrzeugs zwei Sensoren 20 und 22.

Die hinteren Sensoren 22 befinden sich im Heck des Egofahrzeugs 10 mit einer Blickrichtung von in etwa 45° nach hinten. Die vorderen Sensoren 20 haben eine Ausrichtung zur Seite. Die hinteren Sensoren 22 erkennen Objekte im toten Winkel. Die vorderen Sensoren 20 plausibilisieren über die Zeit und Fahrdistanz Objekte, wie Leitplanken und den entgegenkommenden Verkehr, und unterdrücken in einem solchen Fall eine Warnung.

Um sich von hinten nähernde Fahrzeuge frühzeitig zu detektieren, wird zusätzlich ein weiterer Sensor 24, z.B. ein LRR, eingesetzt. Dieser hat eine Reichweite von über 150m. Nähert sich das Zielfahrzeug 12 von hinten, wird es vom weiteren Sensor 24 des ausgestatteten Egofahrzeug 10 erfasst bzw. detektiert. Zunächst wird das erfasste Objekt als Zielfahrzeug 12 erkannt und bestätigt (Plausibilisierung). Danach wird die Relativgeschwindigkeit zum Egofahrzeug 10 bestimmt. Daraus lässt sich die Zeit zur möglichen Kollision (Time to Collision: TTC) berechnen. Reicht der Abstand zwischen beiden Fahrzeugen 10 und 12 nicht für einen Spurenwechsel, wird im Egofahrzeug 10 eine Warnung ausgelöst, in diesem Fall werden alle vier Signalleuchten 18 betätigt.

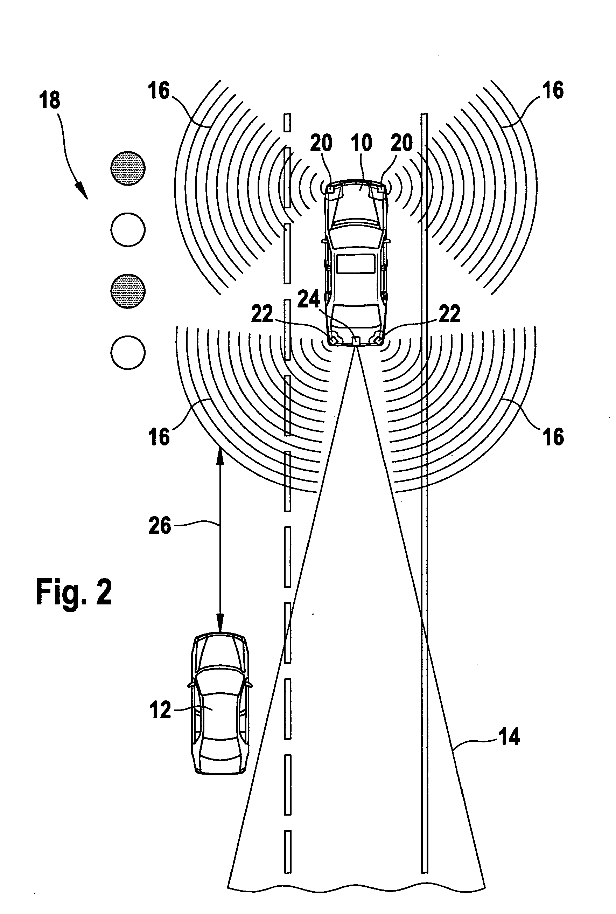

Die Darstellung zeigt, dass sich der Erfassungsbereich 14 des zusätzlichen Sensor 24, nicht mit den Erfassungsbereichen 16 der hinteren Sensoren 22 überschneidet. Es existiert ein Übergang bzw. Übergangsbereich 26, der in Figur 2 mit einem Doppelpfeil angedeutet ist. Befindet sich das Zielfahrzeug 12 in diesem Übergang 26, wird mit den Signalleuchten 18 eine intermittierende Warnung ausgegeben, da das Zielfahrzeug 12 von keinem der Sensoren 20, 22 und 24 erfasst wird. Mit der letzten gemessenen Relativgeschwindigkeit aus dem zusätzlichen Sensor 24 und weiteren Daten, wie bspw. Beschleunigung des Egofahrzeugs 10, Verkehrssituation, usw., wird der Zeitraum bis zum Eintritt in den Bereich 16 der hinteren Sensoren 22 präzidiert. Trifft das Zielfahrzeug 12 nach Ablauf des vorhergesagten Zeitraums mit gewissen Toleranzen nicht in den Erfassungsbereich 16 der hinteren Sensoren 22 (timeout), wird die Warnung beendet.

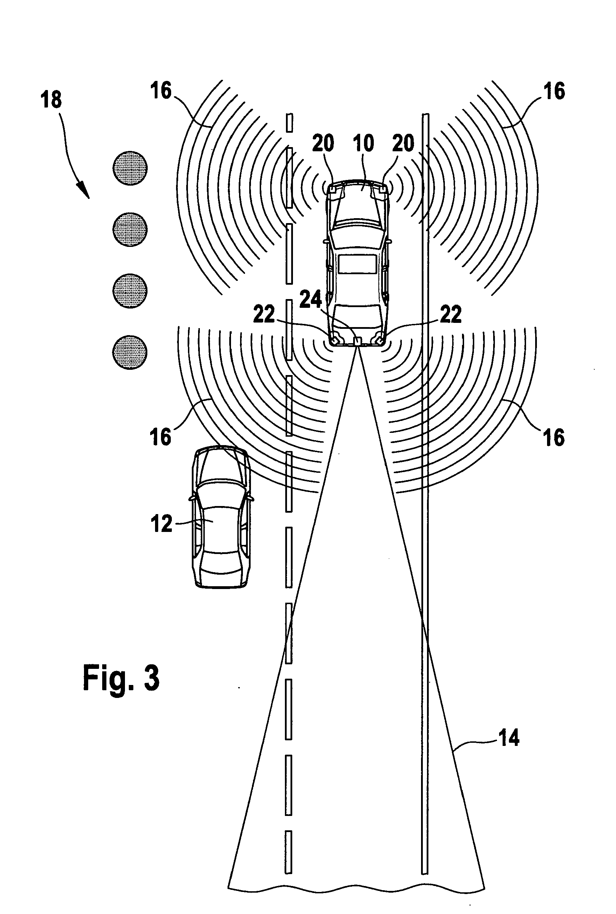

Wird ein Objekt in der präzidierten Zeitspanne von den hinteren Sensoren 22 detektiert, kann wieder eine vorgegebene Warnung mit den Signalleuchten 18 ausgegeben werden, wie dies in Figur 3 dargestellt ist. Für diesen Fall wird die Plausibilisierung des Zielfahrzeugs 12 von der Vorhersage zeitlich gekürzt, d.h. von drei Detektionszyklen auf einen reduziert, da ein Objekt, in diesem Fall das Zielfahrzeug 12, ja "erwartet" wurde. Auf diese Weise kann der Fahrer eine Warnung früher erhalten und sein Fahrverhalten rechtzeitig der Situation anpassen.

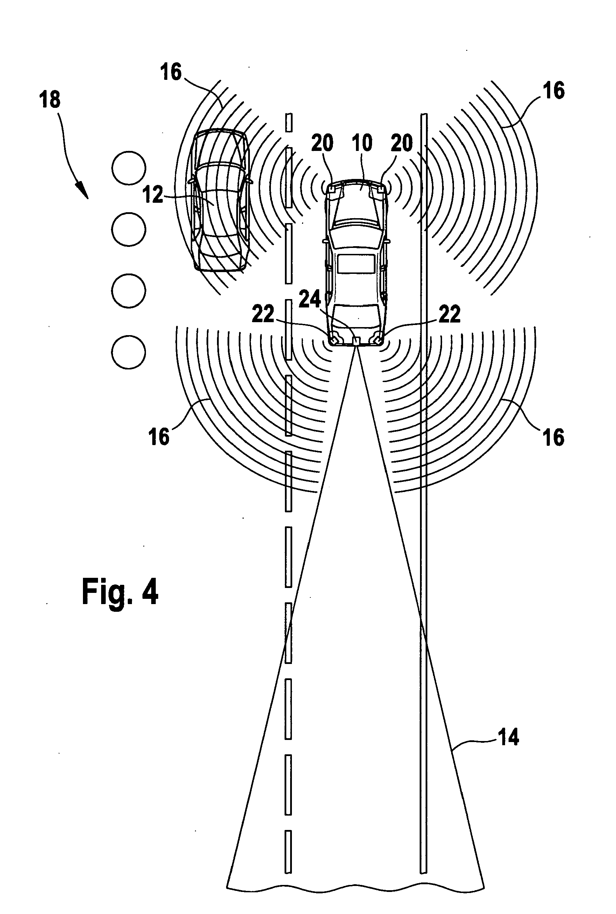

Die Warnung wird so lange ausgegeben, bis das Zielfahrzeug 12 von dem Fahrer im Egofahrzeug 10 eindeutig gesehen wird, wie dies in Figur 4 dargestellt ist. Der Überholvorgang ist nahezu beendet, das Zielfahrzeug befindet sich im Erfassungsbereich 16 des linken vorderen Sensors 20, so dass die Gefährdungssituation beendet ist. Dem Fahrer des Egofahrzeugs 10 wird somit vermittelt, dass ein Spurwechselvorgang ohne Gefahr durchgeführt werden könnte.

Das in den Figuren 1 bis 4 erläuterte Verfahren warnt den Fahrer nur bei gefährlichen Situationen. Eine Überforderung des Fahrers infolge eines Übermaßes an Informationen erfolgt nicht.

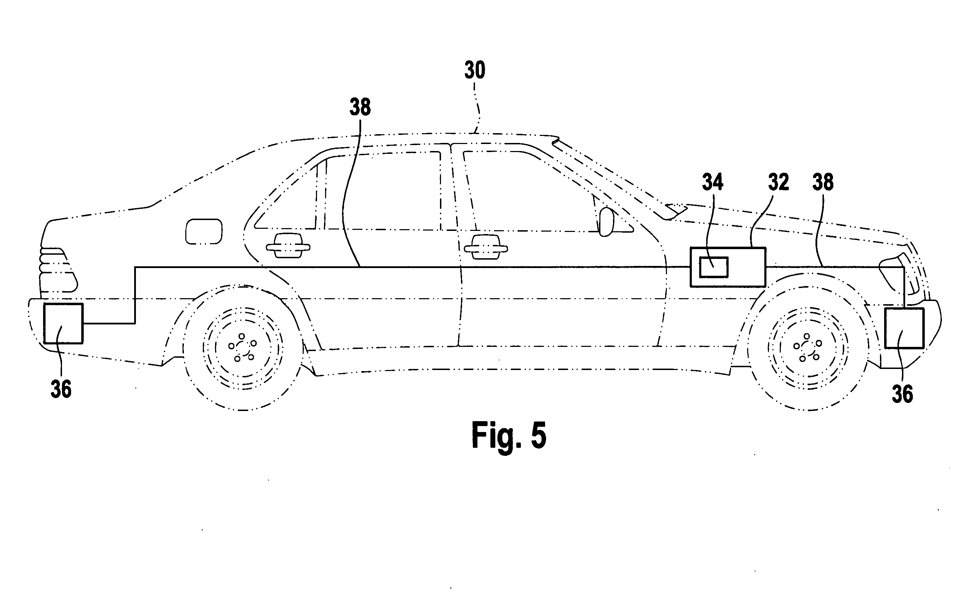

In Figur 5 ist ein Fahrzeug 30 mit einer Ausführungsform der erfindungsgemäßen Einrichtung dargestellt, die insgesamt mit der Bezugsziffer 32 versehen ist. In dieser Einrichtung 32 ist eine Recheneinheit 34 vorgesehen, die von Sensoren 36, die mit der Einrichtung 32 über Signalleitungen 38 in Verbindung stehen, erfasste Daten zu Verkehrsteilnehmer und Verkehrssituationen auswertet.

Diese Auswertung ermöglicht eine weitreichende Information des Fahrers über gefährliche Verkehrssituationen. Übergänge zwischen unterschiedlichen Erfassungsbereichen der Sensoren 36 werden durch Nutzung eines Übergabealgorithmus durch Vorhersage überbrückt.

## Patentansprüche

1. Verfahren zum Erfassen eines Umfelds eines Fahrzeugs (10, 12, 30), mit einer Anzahl von Sensoren (20, 22, 24, 36), wobei die Sensoren unterschiedliche Erfassungsbereiche (14, 16) haben, wobei ein Objekt detektiert wird, wobei ein Übergang (26) des Objekts zwischen jeweils zwei Erfassungsbereichen (14, 16) durch Nutzung eines Übergabealgorithmus durch Vorhersagen überbrückt wird, **dadurch gekennzeichnet, dass** auf den Übergang (26) zwischen zwei Erfassungsbereichen (14, 16) hingewiesen wird.

2. Verfahren nach Anspruch 1, bei dem ein Totenwinkelbereich des Fahrzeugs mit zumindest einem der Sensoren (20, 22, 24, 36) erfasst wird.

3. Verfahren nach Anspruch 2, bei dem der Totenwinkelbereich des Fahrzeugs (10, 12, 30) mit einem Ultraschallsensor erfasst wird.

4. Verfahren nach einem der Ansprüche 1 bis 3, bei dem ein Sensor (20, 22, 24, 36) mit hoher Reichweite zur Erfassung eines Bereichs hinter dem Fahrzeug (10, 12, 30) eingesetzt wird.

5. Verfahren nach einem der Ansprüche 1 bis 4, bei dem bei Vorliegen eines Gefahrenzustands eine Warnung ausgegeben wird.

6. Verfahren nach einem der Ansprüche 1 bis 5, das zur Unterstützung eines Spurwechselassistenten eingesetzt wird.

7. Einrichtung zur Durchführung eines Verfahrens zum Erfassen eines Umfelds eines Fahrzeugs (10, 12, 30), insbesondere zur Durchführung eines Verfahrens nach einem der Ansprüche 1 bis 6, die mit einer Anzahl von Sensoren (20, 22, 24, 36) mit unterschiedlichen Erfassungsbereichen (14, 16) zu verbinden ist, wobei die Einrichtung (32) dazu ausgelegt ist, einen Übergang (26) eines Objekts zwischen zwei Erfassungsbereichen (14, 16) zu erkennen und diesen durch Nutzung eines Übergabealgorithmus durch Vorhersagen zu überbrücken, **dadurch gekennzeichnet, dass** auf den Übergang (26) zwischen zwei Erfassungsbereichen (14, 16) hingewiesen wird.

8. Einrichtung nach Anspruch 7, mit einer Recheneinheit (34) zur Durchführung des Verfahrens nach einem der Ansprüche 1 bis 6.

9. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit (34), insbesondere in einer Einrichtung (32) nach Anspruch 8, ausgerührt wird.

10. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit (34), insbesondere in einer Einrichtung (32) nach Anspruch 7, ausgerührt wird.

## Claims

1. Method for sensing an environment of a vehicle (10, 12, 30), with a number of sensors (20, 22, 24, 36), wherein the sensors have different sensing ranges (14, 16), wherein an object is detected, wherein a transition (26) of the object between, in each case, two sensing ranges (14, 16) is bridged by prediction by using a transition algorithm, **characterized in that** a transition (26) between two sensing ranges (14, 16) is indicated.

2. Method according to Claim 1, in which a blind spot region of the vehicle is sensed with at least one of the sensors (20, 22, 24, 36).

3. Method according to Claim 2, in which the blind spot region of the vehicle (10, 12, 30) is sensed with an ultrasonic sensor.

4. Method according to one of Claims 1 to 3, in which a long-range sensor (20, 22, 24, 36) is used for sensing a region behind the vehicle (10, 12, 30).

5. Method according to one of Claims 1 to 4, in which a warning is issued if a hazardous state occurs.

6. Method according to one of Claims 1 to 5, which is used to support a lane change assistant.

7. Device for carrying out a method for sensing an environment of a vehicle (10, 12, 30), in particular for carrying out a method according to one of Claims 1 to 6, which device can be connected to a number of sensors (20, 22, 24, 36) with different sensing ranges (14, 16), wherein the device (32) is configured to detect a transition (26) of an object between two sensing ranges (14, 16) and to bridge this transition by prediction by using a transition algorithm, **characterized in that** the transition (26) between two sensing ranges (14, 16) is indicated.

8. Device according to Claim 7, having a computing unit (34) for carrying out the method according to one of Claims 1 to 6.

9. Computer program with program code means for carrying out all the steps of a method according to one of Claims 1 to 6 when the computer program is run on a computer or a corresponding computing unit (34), in particular in a device (32) according to Claim 8.

10. Computer program product with program code means which are stored on a computer-readable data carrier, for carrying out all the steps of a method according to one of Claims 1 to 6 when the computer program is run on a computer or a corresponding computing unit (34), in particular in a device (32) according to Claim 7.

## Revendications

1. Procédé de détection de l'environnement d'un véhicule (10, 12, 30), avec une pluralité de capteurs (20, 22, 24, 36), selon lequel les capteurs possèdent des zones de détection (14, 16) différentes, selon lequel un objet est détecté, selon lequel une transition (26) de l'objet entre deux zones de détection (14, 16) respectives est court-circuitée par prédiction en utilisant un algorithme de transfert, **caractérisé en ce que** la transition (26) entre deux zones de détection (14, 16) est signalée.

2. Procédé selon la revendication 1, selon lequel la zone de l'angle mort du véhicule est détectée avec au moins l'un des capteurs (20, 22, 24, 36).

3. Procédé selon la revendication 2, selon lequel la zone de l'angle mort du véhicule (10, 12, 30) est détectée avec un capteur à ultrasons.

4. Procédé selon l'une des revendications 1 à 3, selon lequel un capteur (20, 22, 24, 36) longue portée est utilisé pour détecter une zone à l'arrière du véhicule (10, 12, 30).

5. Procédé selon l'une des revendications 1 à 4, selon lequel une alerte est diffusée en présence d'une situation de danger.

6. Procédé selon l'une des revendications 1 à 5, selon lequel un assistant de changement de voie est utilisé comme assistance.

7. Dispositif pour mettre en oeuvre un procédé de détection de l'environnement d'un véhicule (10, 12, 30), notamment pour mettre en oeuvre un procédé selon l'une des revendications 1 à 6, qui est à relier avec une pluralité de capteurs (20, 22, 24, 36) qui possèdent des zones de détection (14, 16) différentes, le dispositif (32) étant conçu pour détecter une transition (26) d'un objet entre deux zones de détection (14, 16) et pour court-circuiter celle-ci par prédiction en utilisant un algorithme de transfert, **caractérisé en ce que** la transition (26) entre deux zones de détection (14, 16) est signalée.

8. Dispositif selon la revendication 7, comprenant une unité de calcul (34) pour mettre en oeuvre le procédé selon l'une des revendications 1 à 6.

9. Programme informatique comprenant des moyens de code de programme pour exécuter toutes les étapes d'un procédé selon l'une des revendications 1 à 6 lorsque le programme informatique est exécuté sur un ordinateur ou sur une unité de calcul (34) correspondante, notamment dans un dispositif (32) selon la revendication 8.

10. Produit programme informatique comprenant des moyens de code de programme qui sont enregistrés sur un support de données lisibles par un ordinateur, pour exécuter toutes les étapes d'un procédé selon l'une des revendications 1 à 6 lorsque le programme informatique est exécuté sur un ordinateur ou sur une unité de calcul (34) correspondante, notamment dans un dispositif (32) selon la revendication 7.
